# EUROPEAN PATENT APPLICATION

(11) **EP 4 542 925 A1**
(43) Date of publication of application: **23.04.2025**
(21) Application number: 23829839.2
(22) Date of filing: 31.05.2023
(51) Int. Cl.: H04L 9/32

(54) **VERIFICATION METHOD, TERMINAL DEVICE, NETWORK DEVICE AND MEDIUM**

(30) Priority: 30.06.2022 CN 202210770846
(71) Applicant: ZTE Corporation, Shenzhen, Guangdong 518057 (CN)
(72) Inventor: SONG, Lin, Shenzhen, Guangdong 518057 (CN); YAN, Xincheng, Shenzhen, Guangdong 518057 (CN); ZHOU, Na, Shenzhen, Guangdong 518057 (CN); JIANG, Zhihong, Shenzhen, Guangdong 518057 (CN)
(74) Representative: Aipex B.V.
(86) International application number: PCT/CN2023/097382
(87) International publication number: WO 2024/001654

(57) **Abstract**

Provided are a verification method, a terminal device, a network device and a medium. The verification method includes the following: A time authentication factor is generated based on a first terminal timestamp and a time difference, where the first terminal timestamp is a local timestamp of the terminal device when generating the time authentication factor, and the time difference is the difference between a second terminal timestamp and a first system timestamp. A first check code is generated based on an acquired terminal key and at least one of the time authentication factor or a sequence number. A to-be-verified data packet is generated, and the to-be-verified data packet is sent to the network device for verification, where the to-be-verified data packet includes a source Internet protocol, IP, address, a destination IP address, the first check code, the time authentication factor, and the sequence number.

## Description

### TECHNICAL FIELD

The present application relates to the field of network security technology, for example, a verification method, a terminal device, a network device and a medium.

### BACKGROUND

Replay attacks, also known as resend or freshness attacks, refer to situations where an attacker intercepts and resends a packet that has already been received by a target host to achieve the purpose of deception. Replay attacks may occur in any network communication process. Once the replay is successful, the attacker gains successful access to the server, leading to risks such as server flood attacks, data leakage, or even data tampering.

For identifying and defending against replayed messages, it is crucial to verify the freshness and uniqueness of the data. In the related art, message verification is mainly based on timestamps, serial numbers, or random numbers. However, the drawbacks of the related art include the following: Timestamp-based message verification has high requirements for time synchronization of the two authentication parties, and hackers may edit the captured signal data, rendering timestamp-based verification ineffective. Serial number-based message verification does not require time synchronization, but as soon as a message with a non-continuous serial number is received, the packet will be considered as a replay threat, increasing the false positive rate. Moreover, once an attacker successfully decrypts the message, the attacker can acquire the serial number and increment the serial number with each new transmission to deceive the authentication end. Random number-based message verification requires additional storage of used random numbers. If the storage period is relatively long, the overhead for storing and querying the random numbers becomes significant.

### SUMMARY

The present application provides a verification method, a terminal device, a network device, and a medium to perform double verification of a to-be-verified data packet using a time authentication factor and a sequence number. In this manner, the problems caused by single verification methods, such as high synchronization requirements for timestamps, serial number decryption, and the large overhead of random number verification can be solved, thus improving resistance to replay attacks.

The present application provides a verification method. The method is applied to a terminal device and includes the following:
A time authentication factor is generated based on a first terminal timestamp and a time difference, the first terminal timestamp is a local timestamp of the terminal device when generating the time authentication factor, the time difference is a difference between a second terminal timestamp and a first system timestamp, the second terminal timestamp is a local timestamp of the terminal device when receiving the first system timestamp, and the first system timestamp is a timestamp issued by a third-party device or a network device. A first check code is generated based on an acquired terminal key and the time authentication factor and/or a sequence number. A to-be-verified data packet is generated, and the to-be-verified data packet is sent to the network device for verification, where the to-be-verified data packet includes a source Internet protocol (IP) address, a destination IP address, the first check code, the time authentication factor, and the sequence number.

The present application also provides a verification method. The method is applied to a network device and includes the following:
A to-be-verified data packet sent by a terminal device is received, where the to-be-verified data packet includes a source IP address, a destination IP address, a first check code, a time authentication factor, and a sequence number. It is determined whether the to-be-verified data packet satisfies a preset condition, the preset condition includes that the difference between a second system timestamp and the time authentication factor in the to-be-verified data packet is less than the maximum network delay, and the sequence number in the to-be-verified data packet is less than a dynamic limit value, greater than or equal to a window minimum value, and different from a marked sequence number, where the second system timestamp is a timestamp determined by the network device when receiving the to-be-verified data packet, the window minimum value is the minimum sequence number in the current sequence number window, and the sequence number window is a fixed-length sequence number range for storing the marked sequence number. In response to the to-be-verified data packet satisfying the preset condition, a second check code is generated based on a terminal key corresponding to the terminal device and the time authentication factor and/or the sequence number. It is determined whether the first check code and the second check code are the same to obtain a corresponding verification result.

The present application also provides a terminal device.

The terminal device includes one or more processors and a storage apparatus configured to store one or more programs. When executed by the one or more processors, the one or more programs cause the one or more processors to perform the preceding verification method.

The present application also provides a network device.

The network device includes one or more processors and a storage apparatus configured to store one or more programs. When executed by the one or more processors, the one or more programs cause the one or more processors to perform the preceding verification method.

The present application also provides a storage medium storing a computer program. The program, when executed by a processor, performs the preceding verification methods.

### BRIEF DESCRIPTION OF DRAWINGS

FIG. 1 is a flowchart of a verification method according to an embodiment.
FIG. 2 is a flowchart of another verification method according to an embodiment.
FIG. 3 is a diagram illustrating the implementation of a verification method according to an embodiment.
FIG. 4 is another diagram illustrating the implementation of the verification method according to an embodiment.
FIG. 5 is another diagram illustrating the implementation of the verification method according to an embodiment.
FIG. 6 is another diagram illustrating the implementation of the verification method according to an embodiment.
FIG. 7 is a diagram illustrating the structure of a verification apparatus according to an embodiment.
FIG. 8 is a diagram illustrating the structure of another verification apparatus according to an embodiment.
FIG. 9 is a diagram illustrating the hardware structure of a terminal device according to an embodiment.
FIG. 10 is a diagram illustrating the hardware structure of a network device according to an embodiment.

### DETAILED DESCRIPTION

The present application is described in conjunction with drawings and embodiments. The specific embodiments described herein are intended to explain the present application. For ease of description, only parts related to the present application are illustrated in the drawings.

Before example embodiments are discussed, it is to be noted that some of the example embodiments are described as processes or methods depicted in flowcharts. Although the flowcharts describe the operations as sequential processes, many of the operations may be implemented concurrently, coincidently, or simultaneously. Additionally, the sequence of the operations may be rearranged. Each of the processes may be terminated when the operations are completed, but may further have additional operations not included in the drawings. Each of the processes may correspond to one of a method, a function, a procedure, a subroutine, a subprogram, and so on.

Concepts such as "first" and "second" in the embodiments of the present application are used to distinguish between apparatuses, modules, units, or other objects, and are not intended to limit the order or mutual dependence of the functions performed by these apparatuses, modules, units, or other objects.

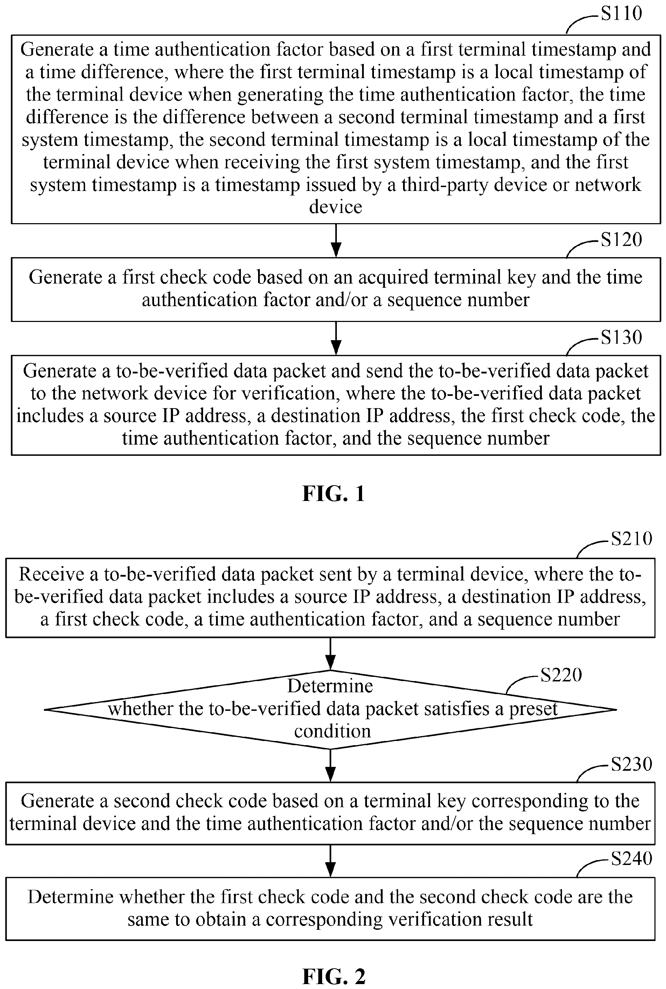

FIG. 1 is a flowchart of a verification method according to an embodiment. This embodiment may be applied to a terminal device and is applicable to the case where a to-be-verified data packet is verified. The verification method may be executed by a verification apparatus. The verification apparatus may be implemented by software and/or hardware and integrated into the terminal device.

As shown in FIG. 1, the verification method in this embodiment includes S110, S120, and S130.

In S110, a time authentication factor is generated based on a first terminal timestamp and a time difference. The first terminal timestamp is a local timestamp of the terminal device when generating the time authentication factor, the time difference is the difference between a second terminal timestamp and a first system timestamp, the second terminal timestamp is a local timestamp of the terminal device when receiving the first system timestamp, and the first system timestamp is a timestamp issued by a third-party device or a network device.

In this embodiment, the first terminal timestamp may be understood as the local timestamp when the terminal device generates the time authentication factor; the timestamp may be considered as a time point, which may be accurate to the second level or millisecond level, such as 8:10:30 on June 24, 2022.

The time difference may be understood as the difference between the second terminal timestamp and the first system timestamp. The second terminal timestamp may be understood as the local timestamp when the terminal device receives the first system timestamp. The local timestamp may be considered as the timestamp on the terminal device itself. The first system timestamp may be understood as the timestamp issued by a third-party device or a network device. The third-party device may be understood as a device that can be used to issue the corresponding first system timestamp and is connected to the terminal device for communication. For example, the third-party device may be an authentication server, an enterprise authentication server, or a controller (such as a software defined network (SDN) server). The network device may be understood as a device with routing and computing functions. For example, the network device may be a communication node device such as a gateway, a switch, and a router.

In an embodiment, the first system timestamp may be issued by the third-party device to the terminal device or issued by the network device to the terminal device. In S110, the terminal device may actively acquire the first system timestamp, such as actively acquiring the first system timestamp from a third-party device or a network device, where the acquisition method may be periodic active acquisition; alternatively, the acquisition method may be passive reception. For example, a third-party device or a network device actively issues the first system timestamp to the terminal device for reception. The third-party device or network device may periodically issue the first system timestamp. The first acquisition of the first system timestamp by the terminal device may be active, and the first system timestamp is issued by the third-party device. In the subsequent process, the terminal device may actively acquire or passively receive the first system timestamp.

In this embodiment, the time authentication factor may be understood as a time point for verification generated based on the first terminal timestamp and the time difference. The corresponding time authentication factor may be generated based on the first terminal timestamp and the time difference. For example, the sum of the first terminal timestamp and the time difference may be used as the generated time authentication factor.

In S120, a first check code is generated based on an acquired terminal key and the time authentication factor and/or a sequence number.

In this embodiment, the terminal key may be understood as secret information used for completing corresponding encryption, decryption, integrity verification, and other operations. One terminal device may correspond to one terminal key. Herein, no limitation is imposed on how the terminal device acquires the terminal key. For example, the terminal key corresponding to the terminal identity may be acquired from a third-party device. The terminal identity may be understood as a unique identifier used to characterize the identity of the terminal device, that is, one terminal device may uniquely correspond to one terminal identity.

The sequence number may be understood as a unique identifier used to identify this verification process. No limitation is imposed on the sequence number herein. For example, the sequence number may be a string of 0 and 1 with a length of 32 bits.

In an embodiment, the initial value of the sequence number may be determined by the terminal device, may be determined by the terminal device and the network device through negotiation, or may be determined by a third-party device and issued to the terminal device and the network device. For example, the initial value of the sequence number may be 1 or a random number set based on an actual situation. The sequence number used in the initial verification process is the initial value of the sequence number, counting from the initial value and then incrementing by a set step (such as 1) in each subsequent verification process.

The first check code may be understood as a character code generated by the terminal device for verification. Based on the acquired terminal key and the time authentication factor and/or sequence number, the corresponding first check code may be generated. For example, the corresponding first check code may be generated based the acquired terminal key and the time authentication factor; alternatively, the corresponding first check code may be generated based the acquired terminal key and the sequence number; alternatively, the corresponding first check code may be generated based on the acquired terminal key, the time authentication factor, and the sequence number.

The manner for generating the first check code is not limited in this embodiment. For example, a corresponding algorithm (such as a hash algorithm) may be used to perform corresponding algorithm processing on the acquired terminal key and the time authentication factor and/or sequence number to generate the corresponding first check code.

In S130, a to-be-verified data packet is generated, and the to-be-verified data packet is sent to the network device for verification. The to-be-verified data packet includes a source IP address, a destination IP address, the first check code, the time authentication factor, and the sequence number.

In this embodiment, the to-be-verified data packet may be understood as the generated data packet waiting for verification; the data packet may be understood as a data transmission unit in communication transmission, and the data transmission unit may include to-be-transmitted data content, etc.

The source IP address may be understood as the IP address of the terminal device. The destination IP address may be understood as the IP address of an application server. The application server may be considered as a server device that is going to receive the data packet transmitted by the terminal device, and the application server may also be referred to as a destination server. No limitation is imposed on how the terminal device acquires the source IP address and the destination IP address herein. For example, the terminal device may acquire the source IP address and the destination IP address based on corresponding configuration information.

After generating the time authentication factor and the first check code, a corresponding to-be-verified data packet may be generated, and the generated to-be-verified data packet is sent to the network device for corresponding verification. The to-be-verified data packet may include the source IP address, the destination IP address, the first check code, the time authentication factor, and the sequence number. Herein, no limitation is imposed on how to generate the to-be-verified data packet. For example, the source IP address, the destination IP address, the first check code, the time authentication factor, and the sequence number may be encapsulated into a data packet as data content based on a corresponding data packet structure, and the data packet is the to-be-verified data packet.

In the verification method provided in this embodiment, the generated to-be-verified data packet includes information such as the first check code, time authentication factor, and sequence number. The first check code is also generated based on the time authentication factor and/or sequence number. On this basis, dual verification is performed on the to-be-verified data packet by using the time authentication factor and the sequence number. This method alleviates the problem caused by time desynchronization between the two authentication parties (that is, the terminal device and the network device) and also solves the problems caused by single verification methods, such as high synchronization requirements for timestamps, serial number decryption, and the large overhead of random number verification, thus improving resistance to replay attacks.

In an embodiment, the method for acquiring the first system timestamp includes one of the following:
The third-party device determines the first system timestamp corresponding to the terminal identity, and the third-party device synchronously issues the first system timestamp to the terminal device and the network device, where the third-party device includes an authentication server, an enterprise authentication server, or a controller. The network device determines the first system timestamp corresponding to the terminal identity, and the network device issues the first system timestamp to the terminal device.

In this embodiment, the first system timestamp may correspond to the terminal identity and is determined by a third-party device, and the third-party device issues the first system timestamp synchronously to the corresponding terminal device and network device.

No limitation is imposed on how the third-party device determines the first system timestamp corresponding to the terminal identity herein. For example, the first system timestamp may be the local timestamp when the third-party device is ready to issue the first system timestamp corresponding to the terminal identity. For another example, when the network device is powered on (that is, started), the power-on timestamp (that is, the local timestamp when the network device is powered on) is sent to the third-party device, and the third-party device calculates the time difference between the received power-on timestamp and the local timestamp when the third-party device receives the power-on timestamp and saves the time difference; the third-party device uses the sum of the time difference and the local timestamp when the third-party device starts to calculate the first system timestamp as the obtained first system timestamp.

The first system timestamp may also correspond to the terminal identity and is determined by a network device, and the network device issues the first system timestamp to the terminal device. No limitation is imposed on how the network device determines the first system timestamp corresponding to the terminal identity herein. For example, after a communication connection between the network device and the terminal device is established, when the network device forwards a data packet (also considered as a message) of the application server to the terminal device, the network device may add the local timestamp when the network device starts to forward the data packet to the terminal device to the data packet and send the local timestamp along with the data packet to the terminal device. The first system timestamp may also be issued via a third-party device. That is, the network device sends the local timestamp when the network device starts to forward the data packet to the terminal device to the third-party device, the third-party device calculates and saves the time difference between the local timestamp when the network device starts to forward the data packet to the terminal device and the local timestamp when the third-party device receives this local timestamp, and the third-party device then uses the sum of the time difference and the timestamp when the third-party device starts to calculate the first system timestamp as the first system timestamp and issues the first system timestamp to the terminal device.

In an embodiment, the method for acquiring the terminal key includes the following:
The terminal key corresponding to the terminal identity is determined by a third-party device, and the terminal key is synchronously issued to the terminal device and the network device by the third-party device, where the third-party device includes an authentication server, an enterprise authentication server, or a controller.

In this embodiment, the terminal key may correspond to the terminal identity and is determined by a third-party device, and the terminal key is issued by the third-party device synchronously to the terminal device and the network device. No limitation is imposed on how the third-party device determines the terminal key corresponding to the terminal identity herein. For example, the third-party device may obtain the key after processing the setting parameter information (such as the terminal identity, source IP address, and destination IP address) through a corresponding encryption algorithm.

In an embodiment, generating the first check code based on the terminal key and the time authentication factor and/or the sequence number includes generating the first check code based on the terminal key, the terminal identity, and the time authentication factor and/or the sequence number.

In this embodiment, the generation of the first check code may also include the terminal identity. The first check code may be generated based on the terminal key, the terminal identity, and the time authentication factor and/or the sequence number. For example, the first check code may be generated based on the terminal key, the terminal identity, and the time authentication factor. Alternatively, the first check code may be generated based on the terminal key, the terminal identity, and the sequence number. Alternatively, the first check code may be generated based on the terminal key, the terminal identity, the time authentication factor, and the sequence number. No limitation is imposed on how to generate the first check code here, and reference may be made to the embodiment where the first check code is generated based on the terminal key, the time authentication factor and/or the sequence number.

In an embodiment, the to-be-verified data packet includes the source IP address, the destination IP address, the first check code, the time authentication factor, the sequence number, and the terminal identity.

In this embodiment, if the first check code is generated using the terminal identity, the generated to-be-verified data packet may also include the terminal identity, that is, the to-be-verified data packet includes the source IP address, the destination IP address, the first check code, the time authentication factor, the sequence number, and the terminal identity.

In an embodiment, the method for determining an initial value of the sequence number includes one of the following: determining the initial value by the terminal device; determining the initial value by the terminal device and the network device; and determining the initial value by the third-party device, and issuing the initial value synchronously to the terminal device and the network device by the third-party device.

This embodiment does not limit the method for determining the sequence number. For example, the sequence number may be determined by the terminal device, may be determined by the terminal device and the network device, or may be determined by a third-party device, and the third-party device synchronously issues the initial value to the terminal device and the network device.

The sequence number may be a serial number carried in a data message (that is, a data packet) sent to a target server (that is, an application server) after the terminal device acquires the terminal key. The sequence number may be counted from an initial value (that is, 0), and the sequence number in subsequent data messages may be incremented in sequence based on a step of 1.

FIG. 2 is a flowchart of another verification method according to an embodiment. This embodiment may be applied to a network device and is applicable to the case where a to-be-verified data packet is verified. The verification method may be executed by a verification apparatus. The verification apparatus may be implemented by software and/or hardware and integrated into the network device. For technical details not described in detail in this embodiment, reference may be made to any one of the preceding embodiments.

As shown in FIG. 2, the verification method in this embodiment includes S210, S220, and S230.

In S210, a to-be-verified data packet sent by a terminal device is received, where the to-be-verified data packet includes a source IP address, a destination IP address, a first check code, a time authentication factor, and a sequence number.

In this embodiment, the network device receives a to-be-verified data packet sent by a terminal device. The to-be-verified data packet may include the source IP address, the destination IP address, the first check code, the time authentication factor, and the sequence number. The source IP address in the to-be-verified data packet may be used to indicate which terminal device sends the to-be-verified data packet.

If the first check code of the terminal device side is generated using a terminal identity, the generated to-be-verified data packet may also include the terminal identity, that is, the to-be-verified data packet includes the source IP address, the destination IP address, the first check code, the time authentication factor, the sequence number, and the terminal identity. On this basis, the to-be-verified data packet sent by the terminal device and received by the network device may include the source IP address, the destination IP address, the first check code, the time authentication factor, the sequence number, and the terminal identity.

In S220, it is determined whether the to-be-verified data packet satisfies a preset condition; if the to-be-verified data packet meets the preset condition, S230 is executed.

In this embodiment, the preset condition may be understood as a condition preset for verifying the to-be-verified data packet. The preset condition is not limited here. For example, the preset condition may include two conditions. One condition is that the difference between the second system timestamp and the time authentication factor in the to-be-verified data packet is less than the maximum network delay. The other condition is that the sequence number in the to-be-verified data packet is less than the dynamic limit value, greater than or equal to the window minimum value, and different from a marked sequence number.

The second system timestamp may be understood as the timestamp determined when the network device receives the to-be-verified data packet. For example, the second system timestamp may be the local timestamp when the network device receives the to-be-verified data packet; alternatively, the network device calculates the difference between the acquired first system timestamp and the local timestamp when the network device receives the first system timestamp and then uses the sum of the difference and the local timestamp when the network device receives the to-be-verified data packet as the second system timestamp.

The window minimum value may be understood as the minimum value of the sequence number in the current sequence number window. The sequence number window may be understood as a fixed-length sequence number range for storing the marked sequence number. For example, the sequence number window may be a sequence number range based on the flow and stored by the network device, with a length of 255. The sequence number window may include multiple marked sequence numbers. The marked sequence number may be understood as a sequence number that is marked, that is, a sequence number that has been used to verify a data packet before.

Network delay may be understood as the time required for a data packet to be transmitted from one end of a network to the other end and may also be considered as the time interval from the first bit of a data packet entering the terminal device to the last bit of the data packet output from an application server. The maximum network delay may be understood as the preset maximum network delay value, for example, an empirical value determined based on the network delay, such as 10 ms. No limitation is imposed herein.

The dynamic limit value may be understood as a dynamic value determined based on the window maximum value of the sequence number window, which is not limited herein. For example, the dynamic limit value may be the sum of the window maximum value of the sequence number window and 2^31. The window maximum value of the sequence number window may be understood as the maximum sequence number in the current sequence number window. Since the window maximum value of the sequence number window may be dynamically changed and the dynamic limit value is determined based on the window maximum value, the dynamic limit value may be considered as a dynamic value.

After receiving the to-be-verified data packet, it may be determined whether the to-be-verified data packet satisfies the preset condition. If the preset condition is satisfied, it is continued to execute S230. If the preset condition is not satisfied, it may be considered that the to-be-verified data packet is a replay and can be discarded.

This embodiment does not limit how to determine whether the to-be-verified data packet satisfies a preset condition.

In an embodiment, first, it may be determined whether the difference between the second system timestamp and the time authentication factor in the to-be-verified data packet is less than the maximum network delay. Then, if the difference between the second system timestamp and the time authentication factor in the to-be-verified data packet is less than the maximum network delay, it may represent that the time authentication factor is consistent with the second system timestamp, verification of the time authentication factor is successful, and the other condition may be determined; if the difference between the second system timestamp and the time authentication factor in the to-be-verified data packet is not less than the maximum network delay, the to-be-verified data packet may be discarded. Finally, in the case where the difference is less than the maximum network delay, it may be determined whether the sequence number in the to-be-verified data packet is less than the dynamic limit value, greater than or equal to the window minimum value, and different from the marked sequence number; if the sequence number in the to-be-verified data packet is less than the dynamic limit value, greater than or equal to the window minimum value, and different from the marked sequence number, it may be determined that the to-be-verified data packet satisfies the preset condition; otherwise, the to-be-verified data packet may be discarded.

The order of determining whether the sequence number in the to-be-verified data packet is less than the dynamic limit value, whether the sequence number is greater than or equal to the window minimum value, and whether the sequence number is different from the marked sequence number is not limited here. For example, it is possible to first determine whether the sequence number is less than the dynamic limit value. If the sequence number is less than the dynamic limit value, the next verification is continued; if the sequence number is not less than the dynamic limit value, rollback is likely to occur, the value of the sequence number cannot be determined in this case, and the sequence number may be considered illegal. Then, it is determined whether the sequence number is greater than or equal to the window minimum value. If the sequence number is greater than or equal to the window minimum value, the next verification is continued; if the sequence number is less than the window minimum value, it may represent that the to-be-verified data packet is timed out and there is a risk of replay. Finally, it is determined whether the sequence number is different from the marked sequence number. If the sequence number is different from the marked sequence number, it represents that verification of the sequence number is successful; and if the sequence number is the same as the marked sequence number, it may represent that the to-be-verified data packet has already been sent and is a replay message.

In an embodiment, it may be first determined whether the sequence number in the to-be-verified data packet is less than the dynamic limit value, greater than or equal to the window minimum value, and different from the marked sequence number. On this basis, if the sequence number in the to-be-verified data packet is less than the dynamic limit value, greater than or equal to the window minimum value, and different from the marked sequence number, it may be further determined whether the difference between the second system timestamp and the time authentication factor in the to-be-verified data packet is less than the maximum network delay. If the difference between the second system timestamp and the time authentication factor in the to-be-verified data packet is less than the maximum network delay, it may be determined that the to-be-verified data packet satisfies the preset condition; otherwise, the to-be-verified data packet may be discarded.

In S230, a second check code is generated based on a terminal key corresponding to the terminal device and the time authentication factor and/or the sequence number.

In the embodiment, if the to-be-verified data packet satisfies the preset condition, a second check code may be generated based on the terminal key corresponding to the terminal device, and the time authentication factor and/or the sequence number. For example, a corresponding second check code may be generated based on the terminal key corresponding to the terminal device and the time authentication factor; alternatively, the corresponding second check code may be generated based on the terminal key corresponding to the terminal device and sequence number; alternatively, the corresponding second check code may be generated based on the terminal key corresponding to the terminal device, time authentication factor, and sequence number.

This embodiment does not limit how to generate the second check code. For example, a corresponding algorithm (such as a hash algorithm) may be used to perform corresponding algorithm processing on the acquired terminal key and the time authentication factor and/or the sequence number to generate the corresponding second check code.

The generation of the second check code uses the same parameter and algorithm as the first check code, that is, the parameter and algorithm used to generate the first check code are also applied to the generation of the second check code.

In an embodiment, if the generation of the first check code uses the terminal identity, the generation of the corresponding second check code may also include the terminal identity. For example, the network device may generate the second check code based on the terminal key corresponding to the terminal device, the terminal identity, and the time authentication factor and/or the sequence number.

No limitation is imposed on the acquisition of the terminal key in S230. For example, the terminal key may be synchronously issued by a third-party device, or the network device may acquire the corresponding terminal key from a third-party device according to the terminal identity (since the terminal device has already acquired the terminal key, the third-party device has already generated and stored the terminal key in advance, so the network device may acquire the terminal key corresponding to the terminal identity from the third-party device).

In S240, it is determined whether the first check code and the second check code are the same to obtain a corresponding verification result.

In this embodiment, the verification result may be understood as the result of verifying whether the to-be-verified data packet is a replay based on the determination result of whether the first check code and the second check code are the same.

It is determined whether the first check code and the second check code are the same. If the first check code and the second check code are the same, it may represent that the terminal device and the network device use the same terminal key, algorithm, and related parameters. In this case, the verification result may be that the to-be-verified data packet is not a replay (that is, the to-be-verified data packet may not be considered as a replay data packet). If the first check code and the second check code are different, it may represent that although the time authentication factor and sequence number of the to-be-verified data packet sent by the terminal device are correct, the terminal key, algorithm, and other related parameters used are different from those of the network device, and the terminal device may be an illegal terminal device. In this case, the verification result may be that the to-be-verified data packet is a replay (that is, the to-be-verified data packet may be considered as a replay data packet), and the to-be-verified data packet may be discarded.

The verification method provided in this embodiment uses the preset condition to perform corresponding verification on the time authentication factor and sequence number in the to-be-verified data packet. On the basis of satisfying the preset condition, the first check code in the to-be-verified data packet is verified by the second check code, thereby achieving the dual verification of the time authentication factor and the sequence number, alleviating the problem of time desynchronization between the two authentication parties (that is, the terminal device and the network device), and also solving the problems caused by single verification methods, such as high synchronization requirements for timestamps, serial number decryption, and the large overhead of random number verification. Thus, resistance to replay attacks is improved.

In an embodiment, determining whether the first check code and the second check code are the same to obtain the corresponding verification result includes the following: In the case where the first check code and the second check code are the same, the verification result is that the to-be-verified data packet is not a replay; and in the case where the first check code and the second check code are not the same, the verification result is that the to-be-verified data packet is a replay.

In an embodiment, after the verification result is that the to-be-verified data packet is not a replay, the method also includes the following: comparing the sequence number in the to-be-verified data packet with the window maximum value, where the window maximum value is the maximum sequence number in the current sequence number window; in the case where the sequence number in the to-be-verified data packet is greater than the window maximum value, updating the window maximum value to the sequence number in the to-be-verified data packet, marking the sequence number in the to-be-verified data packet as the marked sequence number, and updating the window minimum value of the sequence number window to the sum of the window minimum value and the difference between the sequence number in the to-be-verified data packet and the window maximum value before the update; in the case where the sequence number in the to-be-verified data packet is less than or equal to the window maximum value, maintaining the window maximum value unchanged.

In this embodiment, after the verification result is that the to-be-verified data packet is not a replay, the sequence number in the to-be-verified data packet may be compared with the window maximum value, where the window maximum value may be understood as the maximum sequence number in the current sequence number window. If the sequence number in the to-be-verified data packet is greater than the window maximum value, the window maximum value may be updated to the sequence number in the to-be-verified data packet, and the sequence number in the to-be-verified data packet is marked as a marked sequence number (that is, it indicates that the sequence number in the to-be-verified data packet is a used sequence number). Since the size of the sequence number window is fixed, after the window maximum value is updated, the window minimum value is also updated synchronously. That is, the window minimum value of the sequence number window may be updated to the sum of the current window minimum value and the difference between the sequence number in the to-be-verified data packet and the window maximum value before the update. That is, the difference between the sequence number in the to-be-verified data packet and the window maximum value before the update is calculated first, and then the sum of the difference and the current window minimum value is used as the new window minimum value.

If the sequence number in the to-be-verified data packet is less than or equal to the window maximum value, the window maximum value may be maintained, that is, the current sequence number window is kept unchanged.

In an embodiment, after the verification result is that the to-be-verified data packet is not a replay, the method also includes forwarding the to-be-verified data packet to an application server corresponding to the destination IP address according to the destination IP address in the to-be-verified data packet.

In this embodiment, the destination IP address is the address of an application server, so the corresponding application server may be determined based on the destination IP address. After the verification result is that the to-be-verified data packet is not the replay, the network device may also forward the to-be-verified data packet to the application server corresponding to the destination IP address according to the destination IP address in the to-be-verified data packet.

In an embodiment, the method for determining the second system timestamp includes one of the following: The second system timestamp is a local timestamp when the network device receives the to-be-verified data packet. The second system timestamp is a timestamp determined based on the local timestamp when the network device receives the to-be-verified data packet and an acquired first system timestamp.

This embodiment does not limit the method for determining the second system timestamp. For example, the second system timestamp may be a local timestamp when the network device receives the to-be-verified data packet.

Alternatively, the second system timestamp may be a timestamp determined based on the local timestamp when the network device receives the to-be-verified data packet and an acquired first system timestamp. For example, the network device calculates the difference between the acquired first system timestamp and the local timestamp when the network device receives the first system timestamp and then uses the sum of the difference and the local timestamp when the network device receives the to-be-verified data packet as the second system timestamp.

The present application is described below by way of example. For technical details not described in detail in this embodiment, reference may be made to any one of the preceding embodiments.

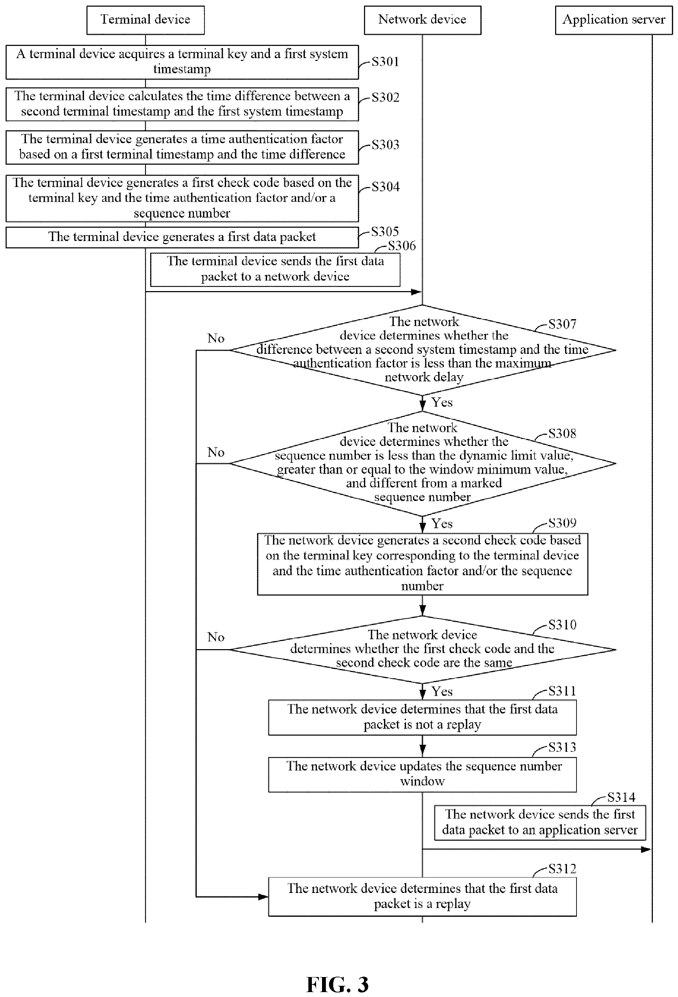

FIG. 3 is a diagram illustrating the implementation of a verification method according to an embodiment. As shown in FIG. 3, the implementation process of the verification method is as follows:
In S301, a terminal device acquires the terminal key and a first system timestamp.
In S302, the terminal device calculates the time difference between a second terminal timestamp and the first system timestamp.
In S303, the terminal device generates a time authentication factor based on a first terminal timestamp and the time difference.
In S304, the terminal device generates a first check code based on the terminal key and the time authentication factor and/or a sequence number.
In S305, the terminal device generates a first data packet (that is, a to-be-verified data packet).
   The first data packet includes a source IP address, a destination IP address, the first check code, the time authentication factor, and the sequence number.
In S306, the terminal device sends the first data packet to a network device.
In S307, the network device determines whether the difference between a second system timestamp and the time authentication factor is less than the maximum network delay; if the difference between the second system timestamp and the time authentication factor is less than the maximum network delay, S308 is executed; if the difference between the second system timestamp and the time authentication factor is not less than the maximum network delay, S312 is executed.
In S308, the network device determines whether the sequence number is less than the dynamic limit value, greater than or equal to the window minimum value, and different from a marked sequence number; if the sequence number is less than the dynamic limit value, greater than or equal to the window minimum value, and different from the marked sequence number, S309 is executed; otherwise, S312 is executed.
In S309, the network device generates a second check code based on the terminal key corresponding to the terminal device and the time authentication factor and/or the sequence number.
In S310, the network device determines whether the first check code and the second check code are the same; if the first check code and the second check code are the same, S311 is executed; if the first check code and the second check code are not the same, S312 is executed.
In S311, the network device determines that the first data packet is not a replay, and S313 continues to be executed.
In S312, the network device determines that the first data packet is a replay.
In S313, the network device updates the sequence number window.
In S314, the network device sends the first data packet to an application server.

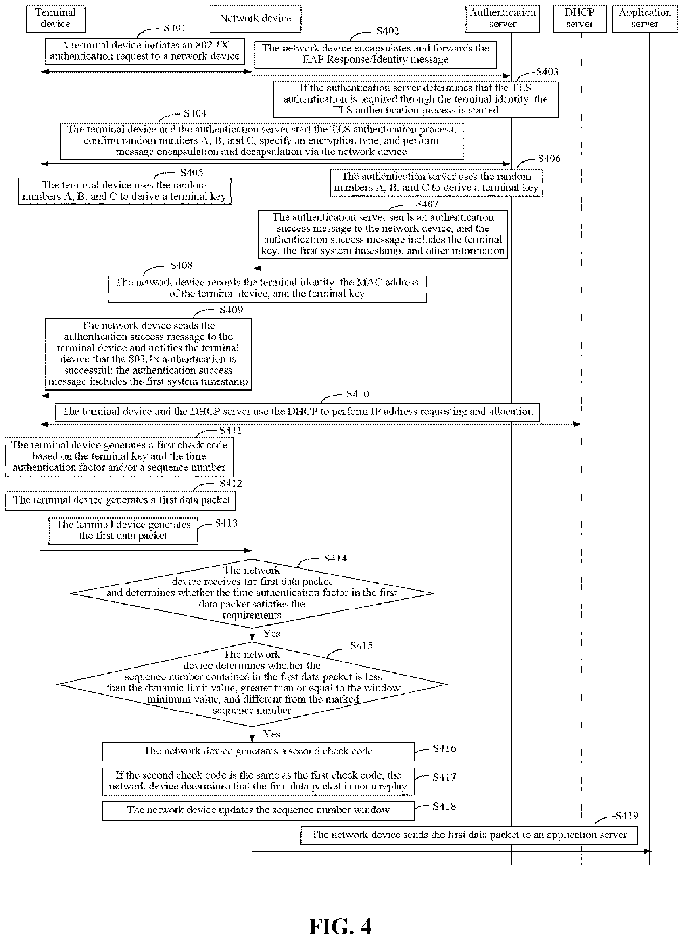

FIG. 4 is another diagram illustrating the implementation of the verification method according to an embodiment. As shown in FIG. 4, the implementation process of the verification method is as follows:
In S401, the terminal device initiates an 802.1X authentication request to the network device.
   802.1x is an access control and authentication protocol based on Client/Server. The network device may be a switch or an authentication system or a switch and an authentication system. The terminal device sends an EAPOL_Start message to the network device to initiate 802.1x authentication. The network device sends an EAP Request/Identity message to the terminal device to inquire about the terminal identity of the terminal device. The terminal device sends an EAP Response/Identity message to the network device to reply with the terminal identity.
In S402, the network device encapsulates and forwards the EAP Response/Identity message.
   The network device encapsulates the EAP Response/Identity message into a Radius-access-request message and sends this message to the authentication server, that is, the network device sends the terminal identity to the authentication server.
In S403, if the authentication server determines that transport layer security (TLS) authentication is required through the terminal identity, the TLS authentication process is started.
In S404, the terminal device and the authentication server start the TLS authentication process, confirm random numbers A, B, and C, specify an encryption type, and perform message encapsulation and decapsulation via the network device in between.
In S405, the terminal device uses the random numbers A, B, and C to derive the terminal key.
In S406, the authentication server uses the random numbers A, B, and C to derive the terminal key.
In S407, the authentication server sends an authentication success message to the network device, and the authentication success message includes the terminal key, first system timestamp, and other information.
In S408, the network device records the terminal identity, the media access control (MAC) address of the terminal device, and the terminal key.
In S409, the network device sends the authentication success message to the terminal device and notifies the terminal device that the 802.1x authentication is successful; and the authentication success message includes the first system timestamp.
In S410, the terminal device and a dynamic host configuration protocol (DHCP) server use the DHCP to perform IP address requesting and allocation.
In S411, the terminal device generates a first check code based on the terminal key and the time authentication factor and/or a sequence number.

The terminal device first calculates the time difference based on the first system timestamp and the second terminal timestamp, then generates a time authentication factor based on the time difference and the first terminal timestamp, and finally generates the first check code based on the terminal key and the time authentication factor and/or the sequence number. The terminal identity may also be added to the generation of the first check code.

In S412, the terminal device generates a first data packet.

The source IP address in the first data packet is the IP address of the terminal device, and the destination IP address is the IP address of an accessed application server. The first data packet also includes the first check code, the time authentication factor, and the sequence number. If the terminal identity is used to generate the first check code, the first data packet also includes the terminal identity. The first check code, the time authentication factor, the sequence number, and other information may be placed in the optional option of an Internet Protocol version 4 (IPv4) message or in the extended header of an Internet Protocol version 6 (IPv6) message.

In S413, the terminal device sends the first data packet.

In S414, the network device receives the first data packet and determines whether the time authentication factor of the first data packet satisfies the requirements; if the time authentication factor satisfies the requirements, S415 continues to be executed.

The difference between the time authentication factor and the second system timestamp is calculated, and it is determined whether the difference is less than the maximum network delay. The maximum network delay may be 10 ms or an empirical value of the network segment. If the difference is less than the maximum network delay, the time authentication factor and the second system timestamp are considered to be consistent, verification of the time authentication factor is successful, and verification of the sequence number is performed. If the difference is not less than the maximum network delay, the first data packet is discarded.

In S415, the network device determines whether the sequence number contained in the first data packet is less than the dynamic limit value, greater than or equal to the window minimum value, and different from the marked sequence number; if the sequence number is less than the dynamic limit value, greater than or equal to the window minimum value, and different from the marked sequence number, S416 is executed.

First, it is determined whether the sequence number contained in the first data packet is less than the dynamic limit value and greater than or equal to the window minimum value, where the dynamic limit value is the sum of 2^31 and the window maximum value of the network device for the flow. If the sequence number is greater than the dynamic limit value or less than the window minimum value, it is determined that the sequence number is illegal and the first data packet is discarded; if the sequence number is less than the dynamic limit value and greater than or equal to the window minimum value, it is determined whether the sequence number is repeated with the marked sequence number. If the sequence number is repeated with the marked sequence number, it is determined that the first data packet has already been sent, the first data packet is a replay message, and the first data packet is discarded; if the sequence number is not repeated with the marked sequence number, the next operation is proceeded to verify the first check code of the first data packet.

In S416, the network device generates a second check code.

The network device generates a second check code based on the terminal key and the time authentication factor and/or sequence number contained in the first data packet. The second check code may also include the terminal identity. The network device calculates the second check code by using the same parameters and algorithms as the terminal device. The network device may store the terminal key when the terminal device applies for the terminal key or the network device may acquire, based on the terminal identity, the terminal key from a third-party device that sends the terminal key and store the terminal identity.

In S417, if the second check code is the same as the first check code, the network device determines that the first data packet is not a replay, and S418 continues to be executed.

The network device compares the generated second check code with the first check code contained in the first data packet. If the second check code is different from the first check code, it indicates that although the time authentication factor and/or sequence number of the first data packet sent by the terminal device is correct, the key and/or algorithm used is different from that of the network device, and the terminal device may be an illegal terminal device. In this case, it is determined that the first data packet is a replay message and is discarded. If the second check code is the same as the first check code, it indicates that the terminal device and the network device use the same key, algorithm, and related parameters, it is determined that the first data packet is not a replay message, and the sequence number window is updated and forwarded.

In S418, the network device updates the sequence number window.

If the sequence number is less than the current window maximum value, the network device marks the sequence number as a marked sequence number and keeps the original window sequence number unchanged. If the sequence number is greater than the current window maximum value and less than the dynamic limit value, the network device marks the sequence number as a marked sequence number and updates the original window maximum value to the sequence number, and the original window minimum value is increased synchronously.

In S419, the network device sends the first data packet to an application server.

The network device forwards the first data packet to the corresponding application server based on the destination IP address contained in the first data packet.

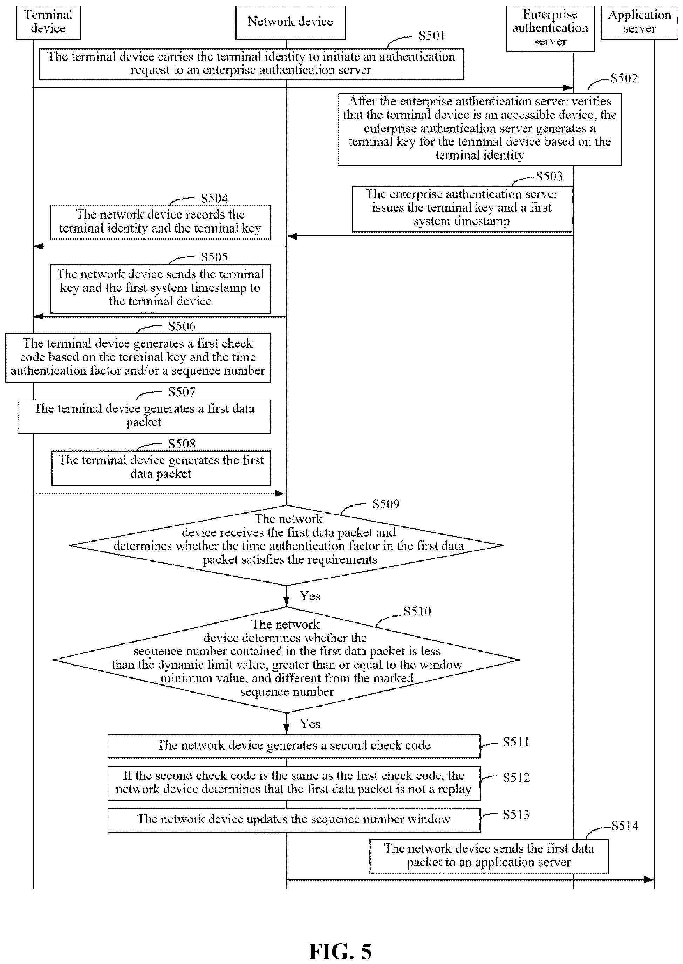

FIG. 5 is another diagram illustrating the implementation of the verification method according to an embodiment. As shown in FIG. 5, the implementation process of the verification method is as follows:
In S501, the terminal device carries the terminal identity to initiate an authentication request to an enterprise authentication server.
In S502, after the enterprise authentication server verifies that the terminal device is an accessible device, the enterprise authentication server generates a terminal key for the terminal device based on the terminal identity.
In S503, the enterprise authentication server issues the terminal key and a first system timestamp.

The terminal key may be securely issued through a secure tunnel, out-of-band, and other methods.

In S504, the network device records the terminal identity and the terminal key.

The network device may be a communication node device such as a gateway, a switch, or a router.

In S505, the network device sends the terminal key and the first system timestamp to the terminal device.

In S506, the terminal device generates a first check code based on the terminal key and the time authentication factor and/or a sequence number.

In S507, the terminal device generates a first data packet.

In S508, the terminal device sends the first data packet.

In S509, the network device receives the first data packet and determines whether the time authentication factor in the first data packet satisfies the requirements; if the time authentication factor satisfies the requirements, S510 continues to be executed.

In S510, the network device determines whether the sequence number contained in the first data packet is less than the dynamic limit value, greater than or equal to the window minimum value, and different from the marked sequence number; if the sequence number is less than the dynamic limit value, greater than or equal to the window minimum value, and different from the marked sequence number, S511 is executed.

In S511, the network device generates a second check code.

In S512, if the second check code is the same as the first check code, the network device determines that the first data packet is not a replay, and S513 continues to be executed.

In S513, the network device updates the sequence number window.

In S514, the network device sends the first data packet to an application server.

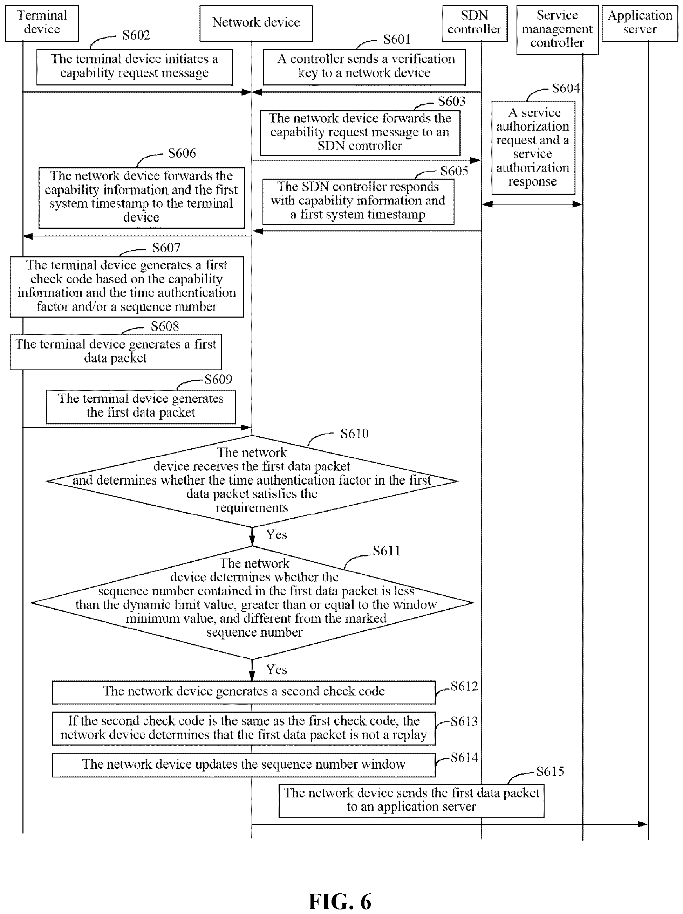

FIG. 6 is another diagram illustrating the implementation of the verification method according to an embodiment. As shown in FIG. 6, the implementation process of the verification method is as follows:
In S601, a controller sends a verification key to a network device.
   The controller may be an SDN controller. The network device may be a device with routing and computing functions, for example, a communication node device such as a gateway, a switch, and a router. One or more network devices may be provided. Multiple network devices may share one verification key or use different verification keys.
In S602, the terminal device initiates a capability request message.
   The capability request message carries the service source IP address, destination IP address, and other information.
In S603, the network device forwards the capability request message to the SDN controller.
In S604, a service authorization request and a service authorization response.
   The SDN controller sends a service authorization request related to the terminal capability request to a service management controller. When the service management controller determines that the terminal device is an accessible device, the service management controller sends a service authorization response to the SDN controller.
In S605, the SDN controller responds with capability information and the first system timestamp.
   The SDN controller calculates the capability information belonging to the terminal device based on parameters such as the verification key, the service source IP, and the destination IP. The capability information may be used as the terminal key.
In S606, the network device forwards the capability information and the first system timestamp to the terminal device.
In S607, the terminal device generates a first check code based on the capability information and the time authentication factor and/or a sequence number.
   The terminal device first calculates the time difference based on the first system timestamp and a second terminal timestamp, then generates a time authentication factor based on the time difference and the first terminal timestamp, and finally generates the first check code based on the capability information and the time authentication factor and/or the sequence number. The terminal identity may also be added to the generation of the first check code.
In S608, the terminal device generates a first data packet.
In S609, the terminal device sends the first data packet.
In S610, the network device receives the first data packet and determines whether the time authentication factor in the first data packet satisfies the requirements; if the time authentication factor satisfies the requirements, S510 continues to be executed.
In S611, the network device determines whether the sequence number contained in the first data packet is less than the dynamic limit value, greater than or equal to the window minimum value, and different from the marked sequence number; if the sequence number is less than the dynamic limit value, greater than or equal to the window minimum value, and different from the marked sequence number, S511 is executed.
In S612, the network device generates a second check code.
   The network device generates the second check code based on the time authentication factor and/or sequence number contained in the first data packet and the verification key of the network device. The second check code may also include the terminal identity. The network device uses the same parameters and algorithms as the terminal device to calculate the second check code. The network device may store the verification key issued by the SDN controller or request and store the verification key from the SDN controller.
In S613, if the second check code is the same as the first check code, the network device determines that the first data packet is not a replay, and S513 continues to be executed.
In S614, the network device updates the sequence number window.
In S615, the network device sends the first data packet to an application server.

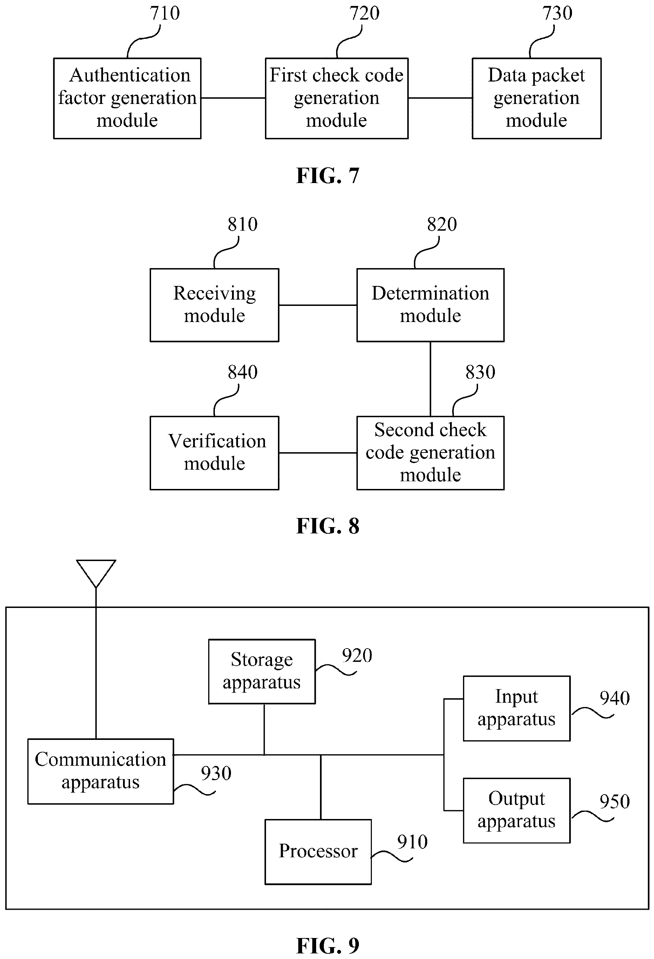

An embodiment of the present application also provides a verification apparatus. FIG. 7 is a diagram illustrating the structure of a verification apparatus according to an embodiment. As shown in FIG. 7, the apparatus includes an authentication factor generation module 710, a first check code generation module 720, and a data packet generation module 730.

The authentication factor generation module 710 is configured to generate a time authentication factor based on a first terminal timestamp and a time difference, where the first terminal timestamp is a local timestamp of the terminal device when generating the time authentication factor, the time difference is the difference between a second terminal timestamp and a first system timestamp, the second terminal timestamp is a local timestamp of the terminal device when receiving the first system timestamp, and the first system timestamp is a timestamp issued by a third-party device or a network device. The first check code generation module 720 is configured to generate a first check code based on an acquired terminal key and the time authentication factor and/or a sequence number. The data packet generation module 730 is configured to generate a to-be-verified data packet and send the to-be-verified data packet to the network device for verification, where the to-be-verified data packet includes a source IP address, a destination IP address, the first check code, the time authentication factor, and the sequence number.

In the verification apparatus provided in this embodiment, the generated to-be-verified data packet includes information such as the first check code, time authentication factor, and sequence number. The first check code is also generated based on the time authentication factor and/or the sequence number. On this basis, dual verification is performed on the to-be-verified data packet by using the time authentication factor and sequence number. This method alleviates the problem of time desynchronization between the two authentication parties (that is, the terminal device and the network device) and also solves the problems caused by single verification methods, such as high synchronization requirements for timestamps, serial number decryption, and the large overhead of random number verification, thus improving resistance to replay attacks.

In an embodiment, the method for acquiring the first system timestamp includes one of the following: The third-party device determines the first system timestamp corresponding to the terminal identity, and the third-party device synchronously issues the first system timestamp to the terminal device and the network device, where the third-party device includes an authentication server, an enterprise authentication server, or a controller. The network device determines the first system timestamp corresponding to the terminal identity, and the network device issues the first system timestamp to the terminal device.

In an embodiment, the method for acquiring the terminal key includes determining, by the third-party device, the terminal key corresponding to a terminal identity, and issuing, by the third-party device, the terminal key synchronously to the terminal device and the network device, where the third-party device includes an authentication server, an enterprise authentication server, or a controller.

In an embodiment, the first check code generation module 720 includes a check code generation unit configured to generate a first check code based on the terminal key, the terminal identity, and the time authentication factor and/or the sequence number.

In an embodiment, the to-be-verified data packet includes the source IP address, the destination IP address, the first check code, the time authentication factor, the sequence number, and the terminal identity.

In an embodiment, the method for determining the initial value of the sequence number includes one of the following: determining the initial value by the terminal device; determining the initial value by the terminal device and the network device; or determining the initial value by the third-party device, and issuing the initial value synchronously to the terminal device and the network device by the third-party device.

The verification apparatus provided in this embodiment and the verification method provided in the preceding embodiments belong to the same concept. For technical details not described in detail in this embodiment, reference may be made to any one of the preceding embodiments. The embodiment has the same effects as the applied verification method.

An embodiment of the present application also provides a verification apparatus. FIG. 8 is a diagram illustrating the structure of another verification apparatus according to an embodiment. As shown in FIG. 8, the apparatus includes a receiving module 810, a determination module 820, a second check code generation module 830, and a verification module 840.

The receiving module 810 is configured to receive a to-be-verified data packet sent by a terminal device, where the to-be-verified data packet includes a source IP address, a destination IP address, a first check code, a time authentication factor, and a sequence number. The determination module 820 is configured to determine whether the to-be-verified data packet satisfies a preset condition, where the preset condition includes that the difference between a second system timestamp and the time authentication factor in the to-be-verified data packet is less than the maximum network delay, and the sequence number in the to-be-verified data packet is less than a dynamic limit value, greater than or equal to the window minimum value, and different from a marked sequence number, where the second system timestamp is a timestamp determined when the network device receives the to-be-verified data packet, the window minimum value is the minimum sequence number in the current sequence number window, and the sequence number window is a fixed-length sequence number range for storing the marked sequence number. The second check code generation module 830 is configured to: in response to the to-be-verified data packet satisfying the preset condition, generate a second check code based on the terminal key corresponding to the terminal device and the time authentication factor and/or the sequence number. The verification module 840 is configured to determine whether the first check code and the second check code are the same to obtain a corresponding verification result.

The verification apparatus provided in this embodiment uses the preset condition to perform corresponding verification on the time authentication factor and sequence number in the to-be-verified data packet. On the basis of satisfying the preset condition, the first check code in the to-be-verified data packet is verified by the second check code, thereby achieving the dual verification of the time authentication factor and the sequence number, alleviating the problem of time desynchronization between the two authentication parties (that is, the terminal device and the network device), and also solving the problems caused by single verification methods, such as high synchronization requirements for timestamps, serial number decryption, and the large overhead of random number verification. Thus, resistance to replay attacks is improved.

In an embodiment, the verification module 840 includes a first verification unit and a second verification unit. The first verification unit is configured to determine that in a case where the first check code and the second check code are the same, the verification result is that the to-be-verified data packet is not A replay. The second verification unit is configured to determine that in a case where the first check code and the second check code are not the same, the verification result is that the to-be-verified data packet is a replay.

In an embodiment, after the verification result is that the to-be-verified data packet is not a replay, the verification module 840 is also configured to compare the sequence number in the to-be-verified data packet with the window maximum value, where the window maximum value is the maximum sequence number in the current sequence number window; in a case where the sequence number in the to-be-verified data packet is greater than the window maximum value, the window maximum value is updated to the sequence number in the to-be-verified data packet, the sequence number in the to-be-verified data packet is marked as the marked sequence number, and the window minimum value of the sequence number window is updated to the sum of the window minimum value and the difference between the sequence number in the to-be-verified data packet and the window maximum value before the update; in the case where the sequence number in the to-be-verified data packet is less than or equal to the window maximum value, the window maximum value is maintained.

In an embodiment, after the verification result is that the to-be-verified data packet is not a replay, the apparatus is further configured to forward the to-be-verified data packet to an application server corresponding to the destination IP address based on the destination IP address in the to-be-verified data packet.

In an embodiment, the method for determining the second system timestamp includes one of the following: The second system timestamp is a local timestamp when the network device receives the to-be-verified data packet. The second system timestamp is a timestamp determined based on the local timestamp when the network device receives the to-be-verified data packet and an acquired first system timestamp.

The verification apparatus provided in this embodiment and the verification method provided in the preceding embodiments belong to the same concept. For technical details not described in detail in this embodiment, reference may be made to any one of the preceding embodiments. The embodiment has the same effects as the applied verification method.

An embodiment of the present application also provides a terminal device. FIG. 9 is a diagram illustrating the structure of hardware of a terminal device according to an embodiment. As shown in FIG. 9, the terminal device provided by the present application includes a storage apparatus 920, a processor 910, and a computer program stored on the storage apparatus and executable by the processor. The processor 910, when executing the program, implements the preceding verification method.

The terminal device may also include the storage apparatus 920. One or more processors 910 may be provided in the communication node, and one processor 910 is used as an example in FIG. 9. The storage apparatus 920 is configured to store one or more programs that, when executed by the one or more processors 910, cause the one or more processors 910 to implement the verification method in embodiments of the present application.

The terminal device also includes a communication apparatus 930, an input apparatus 940, and an output apparatus 950.

The processor 910, the storage apparatus 920, the communication apparatus 930, the input apparatus 940, and the output apparatus 950 that are in the terminal device may be connected through a bus or in other manners. In FIG. 9, the connection through the bus is taken as an example.

The input apparatus 940 may be configured to receive inputted digital or character information and generate key signal input related to user settings and function control of the terminal device. The output apparatus 950 may include a display device such as a display screen.

The communication apparatus 930 may include a receiver and a sender. The communication apparatus 930 is configured to perform information transceiving and communication under the control of the processor 910.

As a computer-readable storage medium, the storage apparatus 920 may be configured to store software programs, computer-executable programs, and modules, such as program instructions/modules (for example, the authentication factor generation module 710, the first check code generation module 720, and the data packet generation module 730 that are in the verification apparatus) corresponding to the verification method according to embodiments of the present application. The storage apparatus 920 may include a program storage area and a data storage area. The program storage area may store an operating system and an application program required by at least one function. The data storage area may store data created depending on use of a terminal device. Additionally, the storage apparatus 920 may include a high-speed random-access memory and may also include a non-volatile memory, such as at least one disk memory device, a flash memory device, or another non-volatile solid-state memory. In some examples, the storage apparatus 920 may include memories that are remotely disposed with respect to the processor 910. These remote memories may be connected to the terminal device via a network. Examples of the preceding network include but are not limited to, the Internet, an intranet, a local area network, a mobile communication network, and a combination thereof.

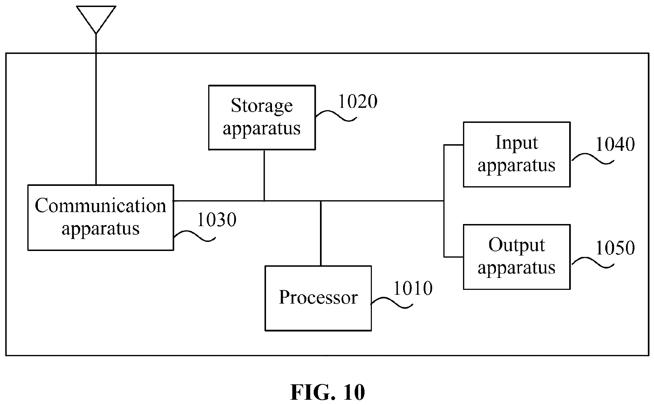

An embodiment of the present application also provides a network device. FIG. 10 is a diagram illustrating the structure of hardware of a terminal device according to an embodiment. As shown in FIG. 10, the network device provided by the present application includes a storage apparatus 1020, a processor 1010, and a computer program stored on the storage apparatus and executable by the processor. The processor 1010, when executing the program, implements the preceding verification method.

The network device may also include the storage apparatus 1020. One or more processors 1010 may be provided in the communication node, and one processor 1010 is used as an example in FIG. 10. The storage apparatus 1020 is configured to store one or more programs that, when executed by the one or more processors 1010, cause the one or more processors 1010 to implement the verification method in embodiments of the present application.

The network device also includes a communication apparatus 1030, an input apparatus 1040, and an output apparatus 1050.

The processor 1010, the storage apparatus 1020, the communication apparatus 1030, the input apparatus 1040, and the output apparatus 1050 that are in the network device may be connected through a bus or in other manners. In FIG. 10, the connection through the bus is used as an example.

The input apparatus 1040 may be configured to receive inputted digital or character information and generate key signal input related to user settings and function control of the network device. The output apparatus 1050 may include a display device such as a display screen.

The communication apparatus 1030 may include a receiver and a sender. The communication apparatus 1030 is configured to perform information transceiving and communication under the control of the one or more processors 1010.

As a computer-readable storage medium, the storage apparatus 1020 may be configured to store software programs, computer-executable programs, and modules, such as program instructions/modules (for example, the receiving module 810, the determination module 820, the second check code generation module 830, and the verification module 840 that are in the verification apparatus) corresponding to the verification method according to embodiments of the present application. The storage apparatus 1020 may include a program storage region and a data storage region. The program storage region may store an operating system and an application program required by at least one function. The data storage region may store data created depending on the use of a network device. Additionally, the storage apparatus 1020 may include a high-speed random-access memory and may also include a non-volatile memory, such as at least one disk memory device, a flash memory device, or another nonvolatile solid-state memory. In some examples, the storage apparatus 1020 may include memories located remotely relative to the one or more processors 1010, and these remote memories may be connected to the network device via a network. Examples of the preceding network include but are not limited to, the Internet, an intranet, a local area network, a mobile communication network, and a combination thereof.

An embodiment of the present application also provides a storage medium. The storage medium stores a computer program which, when executed by a processor, causes the processor to perform the verification method according to any embodiment of the present application.

The method includes the following: A time authentication factor is generated based on a first terminal timestamp and a time difference, the first terminal timestamp is a local timestamp of the terminal device when generating the time authentication factor, the time difference is the difference between a second terminal timestamp and a first system timestamp, the second terminal timestamp is a local timestamp of the terminal device when receiving the first system timestamp, and the first system timestamp is a timestamp issued by a third-party device or a network device. A first check code is generated based on an acquired terminal key and the time authentication factor and/or a sequence number. A to-be-verified data packet is generated, and the to-be-verified data packet is sent to the network device for verification, where the to-be-verified data packet includes a source IP address, a destination IP address, the first check code, the time authentication factor, and the sequence number.

The method includes the following: A to-be-verified data packet sent by a terminal device is received, where the to-be-verified data packet includes a source IP address, a destination IP address, a first check code, a time authentication factor, and a sequence number. It is determined whether the to-be-verified data packet satisfies a preset condition, where the preset condition includes that the difference between a second system timestamp and the time authentication factor in the to-be-verified data packet is less than the maximum network delay, and the sequence number in the to-be-verified data packet is less than a dynamic limit value, greater than or equal to the window minimum value, and different from a marked sequence number, where the second system timestamp is a timestamp determined by the network device when receiving the to-be-verified data packet, the window minimum value is the minimum sequence number in the current sequence number window, and the sequence number window is a fixed-length sequence number range for storing the marked sequence number. In response to the to-be-verified data packet satisfying the preset condition, a second check code is generated based on the terminal key corresponding to the terminal device and the time authentication factor and/or the sequence number. It is determined whether the first check code and the second check code are the same to obtain a corresponding verification result.

A computer storage medium in this embodiment of the present application may adopt any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or device, or any combination thereof. The computer readable storage medium includes (a non-exhaustive list): an electrical connection having one or more wires, a portable computer disk, a hard disk, a random access memory (RAM), a read-only memory (ROM), an erasable programmable read-only memory (EPROM), a flash memory, an optical fiber, a portable compact disk-ROM (CD-ROM), an optical memory component, a magnetic memory component, or any appropriate combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included on the computer-readable medium may be transmitted on any suitable medium including, but not limited to, a wireless medium, a wire, an optical cable, a radio frequency (RF), or any suitable combination thereof.

Computer program codes for performing the operations of the present application may be written in one or more programming languages or a combination of multiple programming languages. The programming languages include object-oriented programming languages such as Java, Smalltalk, and C++ and may also include conventional procedural programming languages such as "C" or similar programming languages. The program codes may be executed entirely on a user computer, partly on a user computer, as a stand-alone software package, partly on a user computer and partly on a remote computer, or entirely on a remote computer or a server. In a case related to the remote computer, the remote computer may be connected to the user computer via any type of network including a local area network (LAN) or a wide area network (WAN) or may be connected to an external computer (for example, via the Internet by an Internet service provider).

The above descriptions are only example embodiments of the present application and are not intended to limit the scope of the present application.

It is to be understood by those skilled in the art that the term user terminal encompasses any suitable type of wireless user device, for example, a mobile phone, a portable data processing apparatus, a portable web browser, or a vehicle-mounted mobile station.

Generally speaking, various embodiments of the present application may be implemented in hardware or special-purpose circuits, software, logic, or any combination thereof. For example, some aspects may be implemented in hardware while other aspects may be implemented in firmware or software executable by a controller, a microprocessor, or another calculation apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, state setting data, or source or object codes written in any combination of one or more programming languages.

A block diagram of any logic flow among the drawings of the present application may represent program procedures, may represent interconnected logic circuits, modules, and functions, or may represent a combination of program procedures with logic circuits, modules, and functions. Computer programs may be stored in a memory. The memory may be of any type suitable for the local technical environment and may be implemented by using any suitable data storage technology, such as, but not limited to, a ROM, a RAM, an optical storage apparatus and system (a digital video disc (DVD) or a CD), and the like. Computer-readable media may include non-transitory storage media. The data processor may be of any type suitable for a local technical environment, such as, but not limited to, a general-purpose computer, a special-purpose computer, a microprocessor, a digital signal processing (DSP), an application-specific integrated circuit (ASIC), a field-programmable gate array (FPGA), and a processor based on a multi-core processor architecture.

## Claims

1. A verification method, the method being applied to a terminal device and comprising:
generating a time authentication factor based on a first terminal timestamp and a time difference, wherein the first terminal timestamp is a local timestamp of the terminal device when generating the time authentication factor, the time difference is a difference between a second terminal timestamp and a first system timestamp, the second terminal timestamp is a local timestamp of the terminal device when receiving the first system timestamp, and the first system timestamp is a timestamp issued by a third-party device or a network device;
generating a first check code based on an acquired terminal key and at least one of the time authentication factor or a sequence number; and
generating a to-be-verified data packet and sending the to-be-verified data packet to the network device for verification, wherein the to-be-verified data packet comprises a source Internet protocol, IP, address, a destination IP address, the first check code, the time authentication factor, and the sequence number.

2. The verification method of claim 1, wherein a method for acquiring the first system timestamp comprises one of the following:
determining, by the third-party device, the first system timestamp corresponding to a terminal identity, and issuing, by the third-party device, the first system timestamp synchronously to the terminal device and the network device, wherein the third-party device comprises an authentication server, an enterprise authentication server, or a controller; or
determining, by the network device, the first system timestamp corresponding to a terminal identity, and issuing, by the network device, the first system timestamp to the terminal device.

3. The verification method of claim 1, wherein a method for acquiring the terminal key comprises:
determining, by the third-party device, the terminal key corresponding to a terminal identity, and issuing, by the third-party device, the terminal key synchronously to the terminal device and the network device, wherein the third-party device comprises an authentication server, an enterprise authentication server, or a controller.

4. The verification method of claim 1, wherein generating the first check code based on the terminal key and the at least one of the time authentication factor or the sequence number comprises:
generating the first check code based on the terminal key, a terminal identity, and the at least one of the time authentication factor or the sequence number.

5. The verification method of claim 4, wherein the to-be-verified data packet comprises the source IP address, the destination IP address, the first check code, the time authentication factor, the sequence number, and the terminal identity.

6. The verification method of claim 1, wherein a method for determining an initial value of the sequence number comprises one of the following:
determining, by the terminal device, the initial value;
determining, by the terminal device and the network device, the initial value; or
determining, by the third-party device, the initial value, and issuing, by the third-party device, the initial value synchronously to the terminal device and the network device.

7. A verification method, the method being applied to a network device and comprising:
receiving a to-be-verified data packet sent by a terminal device, wherein the to-be-verified data packet comprises a source Internet protocol, IP, address, a destination IP address, a first check code, a time authentication factor, and a sequence number;
determining whether the to-be-verified data packet satisfies a preset condition, wherein the preset condition comprises that a difference between a second system timestamp and the time authentication factor in the to-be-verified data packet is less than a maximum network delay, and the sequence number in the to-be-verified data packet is less than a dynamic limit value, greater than or equal to a window minimum value, and different from a marked sequence number, wherein the second system timestamp is a timestamp determined by the network device when receiving the to-be-verified data packet, the window minimum value is a minimum sequence number in a current sequence number window, and the sequence number window is a fixed-length sequence number range for storing the marked sequence number;
in response to the to-be-verified data packet satisfying the preset condition, generating a second check code based on a terminal key corresponding to the terminal device and at least one of the time authentication factor or the sequence number; and
determining whether the first check code and the second check code are the same to obtain a corresponding verification result.

8. The verification method of claim 7, wherein determining whether the first check code and the second check code are the same to obtain the corresponding verification result comprises:
in a case where the first check code and the second check code are the same, obtaining the verification result that the to-be-verified data packet is not a replay; and
in a case where the first check code and the second check code are not the same, obtaining the verification result that the to-be-verified data packet is a replay.

9. The verification method of claim 8, wherein after obtaining the verification result that the to-be-verified data packet is not the replay, the method further comprises:
comparing the sequence number in the to-be-verified data packet with a window maximum value, wherein the window maximum value is a maximum sequence number in the current sequence number window;
in a case where the sequence number in the to-be-verified data packet is greater than the window maximum value, updating the window maximum value to the sequence number in the to-be-verified data packet, marking the sequence number in the to-be-verified data packet as the marked sequence number, and updating the window minimum value of the sequence number window to a sum of the window minimum value and a difference between the sequence number in the to-be-verified data packet and the window maximum value before the update; and
in a case where the sequence number in the to-be-verified data packet is less than or equal to the window maximum value, maintaining the window maximum value.

10. The verification method of claim 8, wherein after obtaining the verification result that the to-be-verified data packet is not the replay, the method further comprises:
forwarding the to-be-verified data packet to an application server corresponding to the destination IP address according to the destination IP address in the to-be-verified data packet.

11. The verification method of claim 7, wherein a method for determining the second system timestamp comprises one of the following:
determining that the second system timestamp is a local timestamp when the network device receives the to-be-verified data packet; or
determining that the second system timestamp is a timestamp determined based on a local timestamp when the network device receives the to-be-verified data packet and an acquired first system timestamp.

12. A terminal device, comprising:
at least one processor, and
a storage apparatus configured to store at least one program;
wherein the at least one program, when executed by the at least one processor, causes the at least one processor to implement the verification method of any one of claims 1 to 6.

13. A network device, comprising:
at least one processor, and
a storage apparatus configured to store at least one program;
wherein the at least one program, when executed by the at least one processor, causes the at least one processor to implement the verification method of any one of claims 7 to 11.

14. A storage medium storing a computer program, wherein the computer program, when executed by a processor, causes the processor to implement the verification method of any one of claims 1 to 11.
